Europäisches Patentamt

European Patent Office

Office européen des brevets

(19)

(11) Veröffentlichungsnummer: **0 184 760**
**B1**

(12) **EUROPÄISCHE PATENTSCHRIFT**

(45) Veröffentlichungstag der Patentschrift: **18.07.90**

(51) Int. Cl.⁵: **B 44 C 5/04,** B 32 B 31/20

(21) Anmeldenummer: **85115336.1**

(22) Anmeldetag: **03.12.85**

(54) **Verfahren zum Herstellen eines Verbundelementes.**

(30) Priorität: **08.12.84 DE 3444916**

(43) Veröffentlichungstag der Anmeldung:
**18.06.86 Patentblatt 86/25**

(45) Bekanntmachung des Hinweises auf die
Patenterteilung:
**18.07.90 Patentblatt 90/29**

(84) Benannte Vertragsstaaten:
**AT BE GB IT NL**

(56) Entgegenhaltungen:
**FR-A- 858 246**
**FR-A-2 365 436**

(73) Patentinhaber: **RESOPAL GMBH**
**Hans-Böckler-Strasse 4**
**D-6114 Gross-Umstadt (DE)**

(72) Erfinder: **Werres, Willy**
**Lucasweg 6**
**D-6100 Darmstadt (DE)**

(74) Vertreter: **Katscher, Helmut, Dipl.-Ing.**
**Bismarckstrasse 29**
**D-6100 Darmstadt (DE)**

**Beschreibung**

Die Erfindung betrifft ein Verfahren zur Herstellung eines Verbundelements, das einen metallischen Träger aufweist, der mit einer dekorativen Schichtpreßstoffplatte oder mindestens einer Dekorbahn mittels Klebung verbunden ist. Solche Verbundelemente kommen vorzugsweise bei der Innenverkleidung von Fahrzeugen und beim Ausbau von Gebäuden zur Anwendung.

Bei bekannten Verfahren (beispielsweise gemäß der FR-A-2 365 436 oder der FR-A-858 246) wird auf den metallischen Träger eine Klebstoffschicht aufgebracht, die den Träger mit einer Dekorschicht verbindet. Bei den Verbundelementen, die nach den bisher bekanntgewordenen Verfahren hergestellt wurden, konnte jedoch keine zufriedenstellende dauerhafte Verbindung zwischen dem metallischen Träger und der Dekorschicht, beispielsweise in Form einer dekorativen Schichtpreßstoffplatte, erzielt werden, welche den Anforderungen in den genannten Anwendungsgebieten vollständig genügen kann.

Bei den nach den bekannten Verfahren hergestellten Verbundelementen werden z.B. Epoxid-Acryl- oder Polyesterharze als Bindemittel verwendet. Hierbei ist es auch üblich, Flächenstoffe, die mit den genannten Harzen imprägniert sind, sog. Prepregs, zur Verklebung eines metallischen Trägers mit einer Schichtstoffplatte zu benutzen. Mit einer Kalt- oder Warmaushärtung kann hierbei jedoch nur ein mangelhafter Verbund zwischen dem metallischen Träger und dem Schichtstoff bzw. der Schichtpreßstoffplatte erzielt werden.

Die Nachteile dieser Verbindung werden besonders bei der mechanischen Weiterverarbeitung der Verbundelemente deutlich. Hierbei kommt es, insbesondere beim maßgerechten Zuschneiden sowie schon bei relativ geringen Biegebeanspruchungen sowie Torsions- und Vibrationsbewegungen, zum Abplatzen und Absplittern des Schichtstoffs von dem metallischen Träger. Offensichtlich sind hierbei die Adhäsionskräfte der Bindemittel zu dem Schichtstoffmaterial größer als zu dem metallischen Träger. Es kommt deshalb zu einer glatten Trennung beider Materialien; insbesondere läßt sich die blanke Metallplatte von der Dekorschicht abtrennen.

Der Erfindung liegt deshalb die Aufgabe zugrunde, ein Verfahren aufzuzeigen, mit dem ein Verbundelement mit einem metallischen Träger hergestellt werden kann, bei dem derl Phasenübergang zwischen dem metallischen Träger und einer sich anschließenden Dekorschicht so verbessert wird, daß eine dauerhafte Verbindung zwischen dem metallischen und dem nichtmetallischen Werkstoff geschaffen wird.

Diese Aufgabe wird erfindungsgemäß durch Verfahren gemäß Patentanspruch 1 gelöst.

Das nach dem erfindungsgemäßen Verfahren hergestellte Verbundelement weist eine hohe Schlagfestigkeit und Splitterfreiheit auf. Ferner verfügt es über eine hohe mechanische Festigkeit im Vergleich zu seinem Gewicht. Desweiteren zeichnet es sich durch eine variable Formgebung aus. Insbesondere können mit dem erfindungsgemäßen Verfahren neben Platten mit dekorativen Oberflächen auch Verbundelemente mit geometrischen Formen hergestellt werden, wie sie für den Innenausbau von Fahrzeugen erforderlich sind. Durch entsprechendes Formen des Rohlings und durch eine anschließende Verbindung derselben mit einer Dekorschicht lassen sich solche Bauelemente auf einfache Weise herstellen. Die mit dem metallischen Träger verbundene Dekorschicht kann so ausgebildet werden, daß sie schwer entflammbar ist, so daß das erfindungsgemäße Verbundelement insgesamt eine hohe Feuerbeständigkeit aufweist.

Mit Hilfe des erfindungemäßen Verfahrens wird zunächst ein Rohling hergestellt. Für die Ausbildung des Rohlings wird ein metallischer Träger aus einem Schwarzblech, einem zinkphosphatierten Schwarzblech, einem feuerverzinkten Schwarzblech, einem sendzimirverzinkten Stahlblech, einem Aluminiumblech oder einem Buntmetall verwendet. Auf die Oberfläche dieses Trägers wird ein Haftvermittler aufgetragen. Hierfür wird ein Zweikomponentenbindemittel verwendet, das z.B. unter Zufuhr von Wärme durch Polyaddition oder polymerisation vernetzt. Die kettenförmigen bzw. vernetzten Moleküle des Haftvermittlers zeichnen sich durch hohe Beständigkeit gegen wechselnde Temperatureinflüsse, sowie kaltes und heißes Wasser aus. Als Haftvermittler kann beispielsweise ein lösungsmittelfreier Zweikomponenten- Polvurethanklebstoff verwendet werden. Ebenso kann hierfür ein kopolymeres Vinylacetat, dem Isocyanat als Härter beigeschmischt ist, als Haftvermittler benutzt werden. Ein wärmebeständiges Polychloropren oder ein Gemisch aus Nitril-Kautschuk und einem wärmebeständigen Polychloropren lassen sich ebenfalls als Haftvermittler verwenden. Bei der Verwendung von Zweikomponenten-Polyurethanklebstoffen als Haftvermittler müssen die Alkohol- und Isocyanattypen so gewählt werden, daß sich nach dem Aushärten des Haftvermittlers eine mittelharte bis flexible Filmschicht auf dem Träger ausbildet. In jedem Fall muß sichergestellt werden, daß der ausgehärtete Haftvermittler einen duromeren Film bildet. Auf den ausgehärteten Haftvermittler wird ein Klebstoff aufgetragen. Hierfür kann ein Resorzinharzklebstoff, ein Polyacrylatklebstoff oder ein Phenol-Resorzin-Kondensationsleim benutzt werden. Der auf den Haftvermittler aufgetragene Klebstoff sollte auf jeden Fall so beschaffen sein, daß er nur schwer entflammbar ist. Nach einem kurzen Ablüften wird auf diese Klebstoffschicht eine Haftbrücke aufgelegt. Diese kann erfindungsgemäß durch eine Zellulosebahn, eine kunstharzimprägnierte Zellulosebahn, ein Textilgewebe, ein Glasgewebe, ein nicht brennbares Vlies oder eine nichtbrennbare Matte gebildet werden. Nach dem Auflegen der Haftbrücke werden der Haftvermittler, der Klebstoff und die Haftbrücke im Kurztaktverfahren auf dem metallischen Träger heiß verpreßt. Das Verpressen geschieht bei einem Druck von 0,2 bis 0,5 MPa und einer Temperatur von 30 bis 80°C. Das Verpressen dauert etwa 70 bis 120 sec. Hierbei erfolgt eine Verankerung und Polymerisation des Klebstoffs sowohl im Haftvermittler als auch in der Haftbrücke. Nach dem Aushärten der Schichten ist der Rohling fertiggestellt. Er kann bei Bedarf zwischengelagert oder sofort für die Herstellung von Verbundelementen verwendet werden. Auf den Rohling kann entweder eine Dekorschicht oder eine dekorative Schichtpreßstoffplatte aufgebracht werden. Durch die Anordnung einer Haftbrücke zwischen dem metallischen Träger und der Schichtpreßstoffplatte wird die Phasengrenze zwischen dem metallischen Werkstoff und dem dekorativen Werkstoff verschoben, so daß die Ädhäsionskräfte zwischen der dekorativen Schichtpreßstoffplatte und der Haftbrücke einerseits und dem metallischen Träger und der Haftbrücke andererseits voll zur Wirkung kommen. Mit der Verschiebung der Phasengrenze ist eine weitere wesentliche Voraussetzung geschaffen, um ein Verbundelement zu erhalten, das die für die Weiterverarbeitung erforderlichen Torsions- und Vibrationswiderstände aufweist. Durch den Haftvermittler, der direkt an den metallischen Träger angrenzt, werden gute Adhäsionswerte zur metallischen Oberfläche erzielt, andererseits besitzt er große Kohäsionskräfte, die seine Verbindung mit der Haftbrücke verbessern.

Erfindungsgemäß kann ein so hergestellter Rohling dauerhaft mit einer dekorativen Schichtpreßstoffplatte zu einem Verbundelement zusammengefügt werden. Erst durch diesen gemäß der oben angeführten Beschreibung hergestellten Rohling ist es möglich, ein Verbundelement zu fertigen, das einen metallischen Träger und eine dekorative Oberfläche aufweist. Das erfindungsgemäße Verbundelement ist gleichzeitig in der Lage den bei der Bearbeitung und in den verschiedenen Anwendungsgebieten auftretenden Anforderungen, wie beispielsweise Biege- und Torrsionsbeanspruchungen, Stand zu halten, ohne daß es beim Auftreten solcher Kräfte zu einer Abtrennung des metallischen Trägers von der dekorativen Schichtpreßstoffplatte kommt. Das erfindungsgemäße Verbundelement kann mit herkömmlichen bzw. bereits vorhandenen Maschinen und Verfahren gefertigt werden. Für die Herstellung der Verbundelements wird das bekannte Niederdruckverfahren angewendet. Das Verbinden des Rohlings mit der dekorativen Schichtpreßstoffplatte läßt sich in Furnierpressen durchführen, die für die Herstellung bekannter dekorativer Schichtstoffplatten ebenfalls Verwendung finden. Hierdurch ist es möglich, kostensparend Verfahren und Maschinen einzusetzen, die bereits bekannt bzw. vorhanden sind. Für die Befestigung der dekorativen Schicht auf dem Rohling eignet sich ein wässriger Leimharz, ein wässriges Zweikomponentenklebersystem, ein Dispersionsleim sowie ein Epoxidharz, ein Polyurethanharz, ein Polyesterharz, ein Acrylharz oder Klebstofflösungen, wie beispielsweise Kautschukoder Polyacrylatlösungen, mit deren Hilfe eine ausreichende Flexibilität zwischen dem Rohling und der dekorativen Schichtpreßstoffplatte erzielt werden kann. Das Verbinden des Rohlings mit der dekorativen Schichtpreßstoffplatte erfolgt im Niederdruckverfahren bei einem Druck von 0,2 bis 0,5 MPa und eine Temperatur von 60 bis 80°C. Das Verbinden des Rohlings mit der dekorativen Schichtpreßstoffplatte unter Verwendung des oben erwähnten Klebstoffes kann in einer herkömmlichen Furnierpresse durchgeführt werden.

Zur Bildung eines Verbundelements mit dekorativer Oberfläche und metallischem Träger kann der oben beschriebene Rohling auch mit mehreren kunstharzimprägnierten Papierbahnen verbunden werden. Zur Bildung der dekorativen Oberfläche wird eine als Dekorpapierbahn ausgebildete Papierbahn verwendet, die nach obenhin sichtbar ist. Vorzugsweise wird diese Papierbahn als oberste oder als vorletzte Bahn auf den Rohling aufgelegt. Ist die Dekorbahn die vorletzte Bahn, so wird die oberste Papierbahn durch eine transparente Papierbahn gebildet, durch welche das Dekor der darunterliegenden Papierbahn hindurchscheint. Vorzugsweise werden drei bis vier solcher Papierbahnen aufeinander gelegt. Diese Papierbahnen werden vor dem Auflegen auf den Rohling mit einem Kunstharz imprägniert. Für das Verbinden des Rohlings mit den imprägnierten Papierbahnen kann das bereits seit langem bekannte Hochdruckverfahren angewendet werden. Für das Verpressen des Rohlings mit den Papierbahnen können Pressen benutzt werden, mit deren Hilfe die bereits bekannten dekorativen Schichtpreßstoffplatten gefertigt werden. Ebenso wie bei der ersten Herstellungsmöglichkeit können auch hierbei bekannte Verfahrensschritte und bereits vorhandene Maschinen für die Herstellung benutzt werden, so daß Kosten auch bei der Durchführung dieses Herstellungsverfahrens eingespart werden können. Ein Verbundelement, das mit einem metallischen Träger gemäß dem erfindungsgemäßen Verfahren hergestellt ist, kann großen mechanischen Beanspruchungen ausgesetzt werden. Es besitzt auf Grund seiner flexiblen Klebefugen die Möglichkeit Scherkräfte aufzufangen, die bei Schlinger- und Vibrationsbewegungen in Fahrzeugen auftreten. Biege- und Torsionskräfte, die unter anderem bei der Bearbeitung des Verbundelements auftreten, bewirken keine Abtrennung der dekorativen Schicht von dem Rohling. Deshalb ist das erfindungsgemäß hergestellte Verbundelement für den Innenausbau von Fahrzeugen besonders geeignet.

Das mit dem erfindungsgemäßen Verfahren hergestellte Verbundelement wird nachfolgend anhand von Zeichnungen erläutert.

Es zeigen:

Figur I: Einen nach dem erfindungsgemäßen Verfahren hergestellten Rohling,

Figur 2: ein Verbundelement mit mehreren, kunstharzimprägnierten Zellulosebahnen auf der Oberseite des Rohlings,

Figur 3: ein Verbundelement mit einer dekorativen Schichtpreßstoffplatte als oberster Schicht.

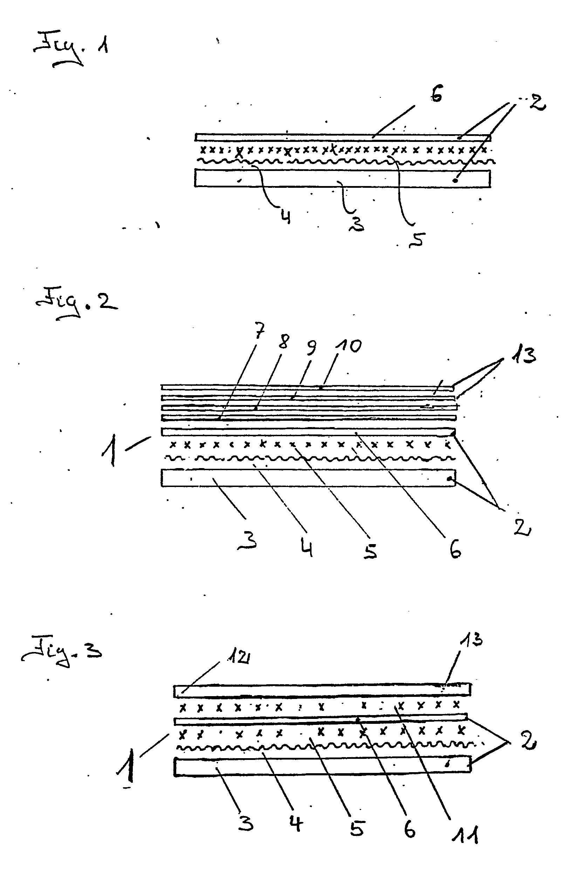

Figur 1 zeigt einen Rohling 2, der nach dem erfindungsgemäßen Verfahren hergestellt und für die Fertigung eines in den Figuren 2 und 3 dargestellten Verbundelementes 1 verwendet wird. Die dekorative Oberfläche des Verbundelementes wird durch eine dekorative Schichtpreßstoffplatte oder mehrere kunstharzimprägnierte Papier- oder Zellulosebahnen gebildet, wovon eine als Dekorbahn ausgebildet und nach obenhin sichtbar ist.

Der in Figur 1 dargestellte Rohling 2 umfaßt einen metallischen Träger 3, der bei dem hier dargestellten Ausführungsbeispiel aus einem Schwarzblech gefertigt ist. Anstelle dieses Materials kann zur Herstellung des Trägers 3 auch ein zinkphosphatiertes Schwarzblech, ein feuerverzinktes Schwarzblech, ein sendzimirverzinktes Stahlblech, eine Aluminiumblech oder ein metallischer Träger aus Buntmetall verwendet werden. Auf die entfettete und gereinigte Oberfläche des metallischen Trägers wird der Haftvermittler 4 aufgebracht. Dieser ist so beschaffen, daß er unter dem Einfluß von Wärme einen duromeren Film bildet. Bei dem hier dargestellten Ausführungsbeispiel wird der Haftvermittler 4 durch ein kopolymeres Vinylacetat gebildet, dem Isocyanat als Härter beigemischt ist. Anstelle dieses Werkstoffs kann auch ein wärmebeständiges Polychloropren oder ein Gemisch aus Nitrilkautschuk und einem wärmebeständigen Polychloropren benutzt werden. Die Verwendung eines Zweikomponenten Polyurethanklebstoffes ist ebenfalls möglich. Zur Sicherung der Substrathaftung und der Flexibilität müssen die Alkohol- und Isocyanatbestandteile so gewählt werden, daß ein mittelharter bis flexibler Film auf dem metallischen Träger 3 gebildet wird. Anschließend wird auf den Haftvermittler 4 ein Klebstoff 5 aufgetragen. Hierfür wird bei dem dargestellten Ausführungsbeispiel ein Resorzinharzklebstoff benutzt. Als Klebstoff 5 kommt auch ein Phenol-Resorzin-Kondensationsleim in Frage. In jedem Fall wird ein geeigneter Klebstoff 5 gewählt, der schwer entflammbar ist. Auf diesen Klebstoff 5 wird eine Haftbrücke 6 aufgelegt. Diese wird durch eine Zellulosebahn gebildet. Anstelle einer einfachen Zellulosebahn kann auch eine kunstharzimprägnierte Zellulosebahn, ein Textilgewebe, ein Glasgewebe, ein nichtbrennbares Vlies oder eine nichtbrennbare Matte verwendet werden.

Durch eine geeignete Wahl von Werkstoffen wird ein Rohling 2 geschaffen, der nur schwer entflammbar ist. Im Kurztaktverfahren werden der Haftvermittler 4, der Klebstoff 5 und die Haftbrücke 6 auf dem metallischen Träger 3 heiß verpreßt, derart, daß der Klebstoff 5 sowohl im Haftvermittler 4 als auch in der Haftbrücke 6 vernetzt bzw. dort durch Polymerisation verankert wird. Das Kurztaktverfahren wird bei einem Druck von 0,2 bis 0,5 MPa und einer Temperatur von 30 bis 80°C durchgeführt. Das Verpressen erfolgt innerhalb von 70 bis 120 sec.

Figur 2 zeigt ein erfindungsgemäßes Verbundelement 1, dessen Kernstück der erfindungsgemäße Rohling 2 ist. Das Verbundelement 1 weist eine dekorative Oberfläche auf. Der für die Herstellung des Verbundelementes 1 verwendete Rohling 2 ist so gefertigt, wie in Figur 1 dargestellt, und in der zugehörigen Beschreibung erläutert. Insbesondere ist auf seinen metallischen Träger 3, dessen Oberfläche vor der Herstellung gereinigt und entfettet wurde, ein Haftvermittler 4 aufgebracht. Auf diesen ist ein Klebstoff 5 aufgetragen, auf welchen die Haftbrücke 6 aufgelegt ist. Auf der Oberfläche der Haftbrükke 6 sind vier mit einem härtbaren Harz imprägnierte Zellulosebahnen 7, 8, 9 und 10 untereinander angeordnet. Erfindungsgemäß ist die oberste Zellulosebahn 10 eine eingefärbte oder bedruckte kunstharzimprägnierte Papierbahn, welche die Dekorschicht 13 bildet. Es besteht die Möglichkeit anstelle der Zellulosebahn 10 die Zellulosebahn 9 als bedruckte oder eingefärbte Papierbahn auszubilden. In diesem Fall wird als Zellulosebahn 10 eine transparente kunstharzimprägnierte Papierbahn verwendet, so daß das Dekor der Zellulosebahn 9 nach obenhin durchsichtig ist. Die auf den Rohling 2 aufgelegten Zellulosebahnen 7, 8, 9 und 10 werden mit diesem unter der Einwirkung von Wärme vorzugsweise bei einer Temperatur von 120 bis 150°C und einem Druck zwischen 0,8 und 1 Mpa verpreßt, wodurch eine dauerhafte Verbindung zwischen den Zellulosebahnen 7 bis 10 und dem Rohling 2 gebildet wird.

Figur 3 zeigt ein weiteres Verbundelement 1, das ebenfalls einen Rohling 2 als Kernstück aufweist. Dieser ist so gefertigt, wie in Figur 1 dargestellt, und in der dazugehörigen Beschreibung erläutert. Auf die Oberfläche des fertiggestellten Rohlings 2 ist ein Klebstoff 11 aufgetragen. Hierfür ist besonders ein wässriger Leimharz, ein wässriger Zweikomponentenkleber, ein Dispersionsleim, ein Epoxidharz, ein Polyurethanharz, ein Polyesterharz, ein Acrylharz oder eine Klebstofflösung wie beispielsweise eine Kautschuk - oder Polyacrylatlösung geeignet. Mit ihrer Hilfe kann eine dekorative Schichtstoffplatte 12 dauerhaft mit dem Rohling 2 verbunden werden. Der Klebstoff 11 wird direkt auf den Rohling 2, insbesondere seine Haftbrücke 6 aufgetragen. Die Unterseite der dekorativen Schichtpreßstoffplatte 12, die auf die Haftbrücke 6 aufgelegt ist, wird vor dem Verkleben zusätzlich aufgerauht. Die bei dem hier dargestellten Ausführungsbeispiel verwendete dekorative Schichtpreßstoffplatte 10 weist einen Kern aus Natronkraftpapieren (hier nicht dargestellt) auf, die mit einem Phenolharz getränkt sind. Auf diesen Kern ist eine dekorative Papierbahn (hier nicht dargestellt) aufgebracht, die ebenfalls mit einem Kunstharz, vorzugsweise einem Melaminharz getränkt ist. Zum Schutz dieser Dekorbahn wird als oberste Schicht eine durchsichtige Zellulosebahn (hier nicht dargestellt) aufgelegt, die ebenfalls mit einem Kunstharz imprägniert ist. Eine so gefertigte Schichtpreßstoffplatte 12 wird mit dem Rohling 2 durch das Aushärten des Klebstoffes 11 dauerhaft verbunden, wofür das bekannte Niederdruckverfahren angewendet wird. Das Verpressen erfolgt bei einem Druck von 0,2 bis 0,5 MPa und einer Temperatur von 30 bis 80°C.

**Patentansprüche**

1. Verfahren zur Herstellung eines Verbundelements (1) mit den Verfahrensschritten,
daß zunächst ein Rohling (2) hergestellt wird, indem auf die Oberfläche eines metallischen Trägers (3) ein aus einem Zweikomponentenbindemittel bestehender, vernetzbarer Haftvermittler (4) aufgetragen wird, daß auf den ausgehärteten Haftvermittler (4) ein Klebstoff (5) aufgetragen wird,
daß auf diese Klebstoffschicht (5) eine Haftbrücke (6) aufgelegt wird,
daß der Haftvermittler (4), der Klebstoff (5) und die Haftbrücke (6) auf dem metallischen Träger (3) heiß verpreßt werden,
und daß anschließend oder zu einem späteren Zeitpunkt dieser Rohling (2) mit einer dekorativen Schichtpreßstoffplatte (12) oder einer oder mehreren Zellulosebahnen (7, 8, 9, 10), wovon wenigstens eine als Dekorbahn ausgebildet ist, verbunden wird.
(Es folgen die geltenden Ansprüche 2 - 9).

2. Verfahren nach Anspruch 1, dadurch gekennzeichnet, daß der Haftvermittler (4) ein unter Zufuhr von Wärme durch Polyaddition oder Polymerisation vernetzbares Zweikomponentenbindemittel ist.

3. Verfahren nach einem der Ansprüche 1 oder 2, dadurch gekennzeichnet, daß der Rohling (2) mit den Zellulosebahnen (7, 8, 9 und 10) durch das Hochdruckverfahren verbunden und wenigstes eine der sichtbaren Zellulosebahn (9, 10) als bedruckte oder eingefärbte kunstharzgetränkt Dekorpapierbahn ausgebildet wird.

4. Verfahren nach Anspruch 1, dadurch gekennzeichnet, daß der Rohling (2) durch die Anwendung des Niederdruckverfahrens mit der dekorativen Schichtpreßstoffplatte (12) verbunden wird.

5. Verfahren nach Anspruch 4, dadurch gekennzeichnet, daß beim Verbinden des Rohlings (2) mit der dekorativen Schichtpreßstoffplatte (12) zwischen der Haftbrükke (6) und der dekorativen Schichtpreßstoffplatte (12) ein Klebstoff (11) angeordnet wird, der durch einen wässrigen Leim, ein wässriges Zweikomponentensystem, einen Dispersionsleim, ein Epoxidharz, ein Polyurethanharz, ein Polyesterharz, ein Acrylharz oder eine Klebstofflösung in Form einer Kautschuk- oder Polyacrylatlösung gebildet wird.

6. Verfahren nach einem der Ansprüche 1 bis 5, dadurch gekennzeichnet, daß auf dem metallischen Träger (2) wenigstens eine Zellulosebahn, eine kunstharzimprägnierte Zellulosebahn, ein Textilgewebe, ein Glasgewebe, ein nichtbrennbares Vlies oder eine nichtbrennbare Matte als Haftbrücke (6) aufgebracht und durch den Haftvermittler (4) und den Klebstoff (5) dauerhaft befestigt wird.

7. Verfahren nach einem der Ansprüche 1 bis 6, dadurch gekennzeichnet, daß auf die Oberfläche des metallischen Trägers (3) ein lösungsmittelfreier Zweikomponenten-Polyurethan-Klebstoff, ein Polychloropren oder ein Gemisch aus Nitril-Kautschuk und wärmebeständigem Polychloropren als Haftvermittler (4) aufgetragen und mittels Wärme zu einem duroelastischen Film ausgehärtet wird.

8. Verfahren nach einem der Ansprüche 1 bis 7, dadurch gekennzeichnet, daß auf den Haftvermittler (4) ein Polyacrylatklebstoff oder ein Phenol-Resorzin-Kondensationsleim oder ein Resorzinharzklebstoff (5) aufgetragen wird.

9. Verfahren nach einem der Ansprüche 1 bis 7, dadurch gekennzeichnet, daß der Rohling (2) unter Verwendung eines metallischen Trägers (3) gefertigt wird, der aus einem Schwarzblech, einem zinkphosphortierten Schwarzblech, einem feuerverzinkten Schwarzblech, einem endzimirver- zinkten Stahlblech, einem Aluminiumblech oder einem Buntmetall hergestellt wird.

**Revendications**

1. Procédé de fabrication d'un élément composé (1), comportant les étapes opératoires qui consistent en ce qu'on prépare d'abord un produit intermédiaire (2) en appliquant sur la surface d'un support métallique (3) un agent adhésif (4) réticulable constitué d'un adhésif à deux composants,
en ce qu'on applique sur l'agent adhésif (4) durci une colle (5),
en ce qu'on dépose sur cette couche de colle (5) une couche adhésive intermédiaire (6),
en ce qu'on presse l'agent adhésif (4), la colle (5) et la couche adhésive (6) à chaud sur le support métallique, et
en ce qu'on assemble ensuite ou ultérieurement ce produit intermédiaire (2) avec un panneau décoratif stratifié comprimé (12) ou avec une ou plusieurs bandes de cellulose (7, 8, 9, 10), l'une au moins de celles-ci constituant une bande décorative.

2. Procédé selon la revendication 1 caractérisé en ce que l'agent adhésif consiste en un adhésif à deux composants, réticulable à chaud par polyaddition ou polymérisation.

3. Procédé selon l'une quelconque des revendications 1 ou 2 caractérisé en ce que le produit intermédiaire (2) muni des bandes de cellulose (7, 8, 9 et 10) est assemblé par le procédé sous pression élevée et en ce que l'une au moins des bandes de cellulose (9, 10) visibles est constituée d'une bande de papier décorative imprégnée de résine synthétique imprimée ou teintée.

4. Procédé selon la revendication 1 caractérisé en ce que le produit intermédiaire (2) est assemblé avec le panneau décoratif comprimé stratifié (12) par le procédé sous basse pression.

5. Procédé selon la revendication 4 caractérisé en ce que, lors de l'assemblage du produit intermédiaire (2) avec le panneau décoratif comprimé stratifié (12), on dépose une colle (11) entre la couche adhésive intermédiaire (6) et le panneau décoratif comprimé stratifié (12, qui est constituée par une colle aqueuse, un système aqueux à deux composants, une colle à dispersion, une résine époxy, une résine de polyuréthane, une résine de polyester, une résine acrylique ou une solution de colle à l'état d'une solution de caoutchouc ou de polyacrylate.

6. Procédé selon l'une quelconque des revendications 1 à 5 caractérisé en ce qu'on dépose sur le support métallique (2) au moins une bande de cellulose, une bande de cellulose imprégnée d'une résine synthétique, un textile tissé, un tissu de verre, un voile incombustible ou un mat incombustible comme couche adhésive intermédiaire et en ce qu'on la solidarise durablement par l'agent adhésif (4) et la colle (5).

7. Procédé selon l'une quelconque des revendications 1 à 6 caractérisé en ce qu'on applique sur la surface du support métallique (3), en tant qu'agent adhésif (4), un adhésif de polyuréthane à deux composants exempt de solvant, un polychloroprène ou un mélange de nitril-caoutchouc et d'un polychloroprène résistant à la chaleur et en ce qu'on le fait durcir à l'aide de la chaleur de manière à obtenir un film thermo-élastique.

8. Procédé selon l'une quelconque des revendications 1 à 7 caractérisé en ce qu'on applique sur l'agent adhésif (4) une colle de polyacrylate ou une colle de condensation de phénol-résorcine ou une colle de résine de résorcine (5).

9. Procédé selon l'une quelconque des revendications 1 à 7 caractérisé en ce que le produit intermédiaire (2) est fabriqué à l'aide d'un support métallique (3) constitué par une feuille métallique noire, une feuille métallique noire traitée au phosphore zinc, une feuille métallique noire zinguée à chaud, une feuille d'acier galvanisée Sendzimir, une feuille d'aluminium ou un métal non ferreux.

## Claims

1. Method for manufacturing a composite element (1) with the method stages

that first a blank (2) is produced, whilst, onto the surface of a metal support (3), a cross-linkable adhesion promoter (4) consisting of a two-component bonding medium is applied, that an adhesive (5) is applied to the cured adhesion promoter (4),

that an adhesion bridge (6) is placed onto this adhesive layer (5), that the adhesion promoter (4), the adhesive (5) and the adhesion bridge (6) are hot-pressed on the metal support (3), and that then or at a later time this blank (2) is joined to a decorative laminated sheet (12) or to one or more cellulose webs (7, 8, 9, 10), of which at least one is designed as a decorative web.

2. Method according to Claim 1, characterised in that the adhesion promoter (4) is a two-component bonding agent which can be crosslinked when heat is supplied by polyaddition or polymerisation.

3. Method according to one of Claims 1 or 2, characterised in that the blank (2) is joined to the cellulose webs (7, 8, 9 and 10) by the highpressure method and at least one of the visible cellulose webs (9, 10) is designed as a printed or coloured decorative paper web impregnated with synthetic resin.

4. Method according to Claim 1, characterised in that the blank (2) is joined to the decorative laminated sheet (12) by the use of the low-pressure method.

5. Method according to Claim 4, characterised in that, when joining the blank (2) to the decorative laminated sheet (12), an adhesive (11) is arranged between the adhesion bridge (6) and the decorative laminated sheet (12), which is formed by an aqueous glue, an aqueous two-component system, a dispersion glue, an epoxy resin, a polyurethane resin, a polyester resin, an acrylic resin or an adhesive solution in the form of a rubber or polyacrylate solution.

6. Method according to one of Claims 1 to 5, characterised in that, on the metal support (2), at least one cellulose web, a cellulose web impregnated with synthetic resin, a textile fabric, a glass fabric, a non-flammable fleece or a non-flammable mat is applied as an adhesion bridge (6) and is attached permanently by the adhesion promoter (4) and the adhesive (5).

7. Method according to one of Claims 1 to 6, characterised in that, on the surface of the metal support (3), a solvent-free two-component polyurethane adhesive, a polychloroprene or a mixture of nitrile rubber and heat-resistant polychloroprene is applied as an adhesion promoter (4) and is cured by means of heat into a duroelastic film.

8. Method according to one of Claims 1 to 7, characterised in that a polyacrylate adhesive or a phenol-resorcin condensation glue or a resorcin resin adhesive (5) is applied to the adhesion promoter (4).

9. Method according to one of Claims 1 to 7, characterised in that the blank (2) is manufactured using a metal support (3) which consists of a black plate, a zinc-phosphated black plate, a hot-galvanised black plate, a Sendzimir-galvanised steel plate, an aluminium plate or a non-ferrous heavy metal.

Fig. 1

Fig. 2

Fig. 3